# EUROPEAN PATENT APPLICATION

(11) **EP 4 618 635 A1**
(43) Date of publication of application: **17.09.2025**
(21) Application number: 23887930.8
(22) Date of filing: 04.11.2023
(51) Int. Cl.: H04W 52/06

(54) **METHOD AND DEVICE FOR NODE USED FOR WIRELESS COMMUNICATION**

(30) Priority: 12.11.2022 CN 202211416048
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/129821
(87) International publication number: WO 2024/099240

(57) **Abstract**

The present application discloses a method and device for a node used for wireless communication. A first node receives first signaling, and sends a first signal in a first time-frequency resource set. The first signaling is used for indicating a first index and a second index; the first index is used for determining a first power value, and the second index is used for determining a second power value; a first target reference signal resource is used for determining an antenna port of the first signal; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

## Description

### Technical Field

The present application relates to a transmission method and device for a wireless communication system, especially a transmission method and device for wireless signals in a wireless communication system supporting a cellular network.

### Background Art

In a 5G NR (New Radio) system, both a base station and terminal equipment will be configured with a plurality of antenna panels. The NR Rel-16 standard can already support base stations to simultaneously send wireless signals by a plurality of antenna panels, but even if the terminal equipment is configured with the plurality of antenna panels, it only supports a transmission based on an antenna panel selection, that is, a wireless transmission is only allowed on one antenna panel at the same moment. In the future evolution of the 5G NR system, in order to improve system capacity, supporting terminal equipment to simultaneously send wireless signals on the plurality of antenna panels is an important evolution direction.

### Summary of the Invention

The inventor found through research that how to determine transmission power of one wireless signal is a key issue.

In view of the above-mentioned problem, the present application discloses a solution. It should be explained that in the description of the present application, a multi-antenna panel is only used as one typical application scenario or example; and the present application can also be applied to a single-antenna panel application scenario. Further, the use of a unified design solution for different scenarios (including but not limited to multi-antenna panels, single-antenna panels, etc.) also facilitates the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other.

As one embodiment, the interpretation of the terminologies in the present application refers to the definition of the 3GPP specification protocol TS36 series.

As one embodiment, the interpretation of the terminologies in the present application refers to the definition of the 3GPP standard protocol TS38 series.

As one embodiment, the interpretation of the terminologies in the present application refers to the definition of the 3GPP standard protocol TS37 series.

As one embodiment, the interpretation of the terminologies in the present application refers to the definition of the standard protocol of the IEEE (Institute of Electrical and Electronics Engineers).

The present application discloses a method used in a first node for wireless communication, comprising:
a first receiver for receiving first signaling; and
a first transmitter for sending a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the problem to be solved by the present application comprises: how to determine transmission power of a wireless signal.

According to one aspect of the present application, it is characterized by comprising:
sending a second signal in the first time-frequency resource set, or abandoning sending the second signal in the first time-frequency resource set,
wherein the first power value and the second power value are used for determining whether the second signal is sent in the first time-frequency resource set.

According to one aspect of the present application, it is characterized in that whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

According to one aspect of the present application, it is characterized in that the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

According to one aspect of the present application, it is characterized in that a linear value of a third power value is the product of a linear value of the first power value and the first coefficient, a linear value of a fourth power value is the product of a linear value of the second power value and the second coefficient, and whether the sum of the third power value and the fourth power value is greater than the first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

According to one aspect of the present application, it is characterized in that the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

According to one aspect of the present application, it is characterized in that the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

According to one aspect of the present application, it is characterized by comprising:
sending a first reference information block and a second reference information block,
wherein the first reference information block is used for indicating a first TPMI set, and the second reference information block is used for indicating a second TPMI set; the first signaling is used for indicating a first TPMI and a second TPMI; and whether the first TPMI belongs to the first TPMI set is used for determining the first coefficient, and whether the second TPMI belongs to the second TPMI set is used for determining the second coefficient.

According to one aspect of the present application, it is characterized by comprising:
receiving a first information block set,
wherein the first coefficient and the second coefficient depend on the first information block set.

The present application discloses a method for a second node used for wireless communication, comprising:
sending first signaling; and
receiving a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

According to one aspect of the present application, it is characterized by comprising:
monitoring a second signal in the first time-frequency resource set,
wherein the first power value and the second power value are used for determining whether the second signal is sent in the first time-frequency resource set.

According to one aspect of the present application, it is characterized in that whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

According to one aspect of the present application, it is characterized in that the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

According to one aspect of the present application, it is characterized in that a linear value of a third power value is the product of a linear value of the first power value and the first coefficient, a linear value of a fourth power value is the product of a linear value of the second power value and the second coefficient, and whether the sum of the third power value and the fourth power value is greater than the first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

According to one aspect of the present application, it is characterized in that the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

According to one aspect of the present application, it is characterized in that the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

According to one aspect of the present application, it is characterized by comprising:
receiving a first reference information block and a second reference information block,
wherein the first reference information block is used for indicating a first TPMI set, and the second reference information block is used for indicating a second TPMI set; the first signaling is used for indicating a first TPMI and a second TPMI; and whether the first TPMI belongs to the first TPMI set is used for determining the first coefficient, and whether the second TPMI belongs to the second TPMI set is used for determining the second coefficient.

According to one aspect of the present application, it is characterized by comprising:
sending a first information block set,
wherein the first coefficient and the second coefficient depend on the first information block set.

The present application discloses a first node device used for wireless communication, comprising:
a first receiver for receiving first signaling; and
a first transmitter for sending a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

The present application discloses a second node device used for wireless communication, comprising:
a second transmitter for sending first signaling; and
a second receiver for receiving a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, compared with a traditional solution, the present application has the following advantages:
when determining the transmission power of the wireless signal, different application scenarios are considered, such as different antenna ports, different beams, different antennas, different spatial characteristics, etc.

### Brief Description of the Drawings

Other features, purposes, and advantages of the present application will become more apparent by reading the detailed description of the non-limiting embodiments with reference to the following figures:
FIG. 1 shows a flow chart of first signaling and a first signal according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;
FIG. 4 shows a schematic diagram of a first communication device and a second communication device according to one embodiment of the present application;
FIG. 5 shows a flow chart of a transmission according to one embodiment of the present application;
FIG. 6 shows a schematic diagram of determining whether a second signal is sent in a first time-frequency resource set according to one embodiment of the present application;
FIG. 7 shows a schematic diagram of transmission power of a first signal and transmission power of a second signal according to one embodiment of the present application;
FIG. 8 shows a schematic diagram of determining whether a second signal is sent in a first time-frequency resource set according to another embodiment of the present application;
FIGS. 9A-9B respectively show a schematic diagram of transmission power of a first signal and transmission power of a second signal according to another embodiment of the present application;
FIG. 10 shows a schematic diagram of a first target reference signal resource according to one embodiment of the present application;
FIGS. 11A-11D respectively show a schematic diagram of a first target reference signal resource according to another embodiment of the present application;
FIG. 12 shows a schematic diagram of a first coefficient and a second coefficient according to one embodiment of the present application;
FIG. 13 shows a schematic diagram of a first coefficient and a second coefficient according to another embodiment of the present application;
FIG. 14 shows a schematic diagram of a first power value and a second power value according to one embodiment of the present application;
FIG. 15 shows a structural block diagram of a processing device for use in a first node device according to one embodiment of the present application; and
FIG. 16 shows a structural block diagram of a processing device for use in a second node device according to one embodiment of the present application.

### Detailed Description of Embodiments

The technical solution of the present application will be further described in detail below in conjunction with the accompanying drawings. It should be explained that in the absence of conflicts, the embodiments in the present application and the features in the embodiments can be arbitrarily combined with each other.

### Embodiment 1

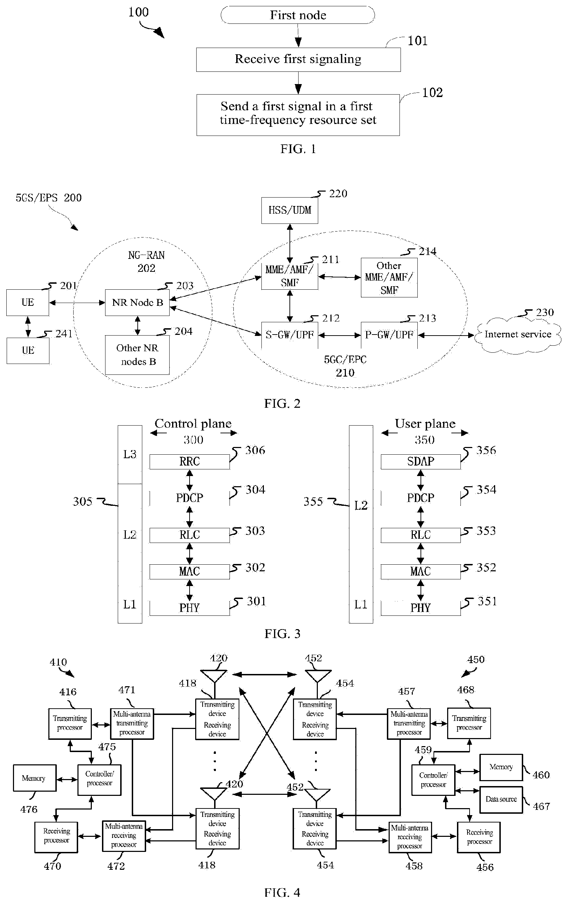

Embodiment 1 illustrates a flow chart of first signaling and a first signal according to one embodiment of the present application, as shown in FIG. 1. In 100 shown in FIG. 1, each block represents one step.

In Embodiment 1, a first node in the present application receives first signaling in step 101; and sends the first signal in a first time-frequency resource set in step 102, wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the first signaling is higher layer signaling.

As one embodiment, the first signaling is RRC signaling.

As one embodiment, the first signaling is MAC CE signaling.

As one embodiment, the first signaling is physical layer signaling.

As one embodiment, the first signaling is the DCI (Downlink Control Information) signaling.

As one embodiment, the first signaling is a DCI signaling used for scheduling a PUSCH (Physical Uplink Shared Channel).

As one embodiment, the first signaling is transmitted on the PDCCH (Physical Downlink Control Channel).

As one embodiment, the first signal includes a baseband signal.

As one embodiment, the first signal comprises a wireless signal.

As one embodiment, the first signal comprises a radio frequency signal.

As one embodiment, the first signal is transmitted on an uplink physical channel.

As one embodiment, the first signal is transmitted on a physical channel.

As one embodiment, the first signal is transmitted on the PUSCH.

As one embodiment, the first signal carries a positive integer number of transport blocks (TBs).

As one embodiment, the first signal carries one transport block.

As one embodiment, the first signal comprises parts of the layers of the PUSCH where it is located.

As one embodiment, the first signal comprises all of the layers of the PUSCH where it is located.

As one embodiment, the first signal comprises parts or all of the layers of the PUSCH where it is located.

As one embodiment, the first signal is transmitted on a codebook based PUSCH.

As one embodiment, the first signaling schedules a PUSCH of N layers, and the first signal carries N1 layers of the N layers, where N1 is a positive integer less than N, and N is a positive integer.

As one embodiment, the first signaling schedules a PUSCH of N layers, and the first signal carries the N layers.

As one embodiment, the first signal carries at least one code block group (CBG).

As one embodiment, the first signaling indicates scheduling information of the first signal.

As one embodiment, the scheduling information of the first signal comprises at least one of an occupied time domain resource, an occupied frequency domain resource, an MCS (Modulation and Coding Scheme), DMRS (DeModulation Reference Signal) configuration information, an HARQ (Hybrid Automatic Repeat reQuest) process number, an RV (Redundancy version), an NDI (New Data Indicator), a number of layers, an antenna port, a TCI state, an SRS (Sounding Reference Signal) resource indicator, or a PMI (Precoding Matrix Indicator).

As one embodiment, the first signaling indicates symbols included in the first time-frequency resource set in a time domain and RBs (Resource Blocks) included in the first time-frequency resource set a frequency domain.

As one embodiment, the first signaling comprises a third domain and a fourth domain, the third domain in the first signaling indicates the symbols included in the first time-frequency resource set in the time domain, and the fourth domain in the first signaling indicates the RBs included in the first time-frequency resource set in the frequency domain; and the third domain comprises at least one bit, and the fourth domain comprises at least one bit.

As one embodiment, the third domain is a time domain resource assignment field, and the fourth domain is a frequency domain resource assignment field.

As one embodiment, the specific definitions of the time domain resource assignment field and the frequency domain resource assignment field refer to Section 7.3.1 of 3GPP TS38.212.

As one embodiment, the same one field in the first signaling indicates a first index and a second index, and one field comprises at least one bit.

As one embodiment, different fields in the first signaling respectively indicate a first index and a second index, and one field comprises at least one bit.

As one embodiment, the first signaling comprises a first domain, the first domain in the first signaling indicates the first index and the second index, and the first domain comprises at least one bit.

As one embodiment, the first signaling comprises a first domain and a second domain, the first domain in the first signaling indicates a first index, and the second domain in the first signaling indicates a second index; and the first domain comprises at least one bit, and the second domain comprises at least one bit.

As one embodiment, the first signaling comprises a first domain and a second domain, a value of the first domain in the first signaling is a first index, and a value of the second domain in the first signaling is a second index; and the first domain comprises at least one bit, and the second domain comprises at least one bit.

As one embodiment, the first signaling comprises a first domain and a second domain; a value of the first domain in the first signaling and a value of the second domain are respectively a first index and a second index, or a value of the first domain in the first signaling and a value of the second domain are respectively a second index and a first index; and the first domain comprises at least one bit, and the second domain comprises at least one bit.

As one embodiment, the first domain is an SRS resource indicator.

As one embodiment, the second domain is a second SRS resource indicator.

As one embodiment, the first index and the second index are respectively two different integers in 0, 1, ..., K - 1, and K is a positive integer greater than 1.

As one embodiment, the first index and the second index are respectively two different integers in 1, 2, ..., K, and K is a positive integer greater than 1.

As one embodiment, the first index and the second index are both non-negative integers.

As one embodiment, the first index and the second index are both positive integers.

As one embodiment, the first index and the second index are the same.

As one embodiment, the first index and the second index are different.

As one embodiment, the first index and the second index respectively correspond to two different antenna panels.

As one embodiment, the first index and the second index are respectively indexes of two different antenna panels.

As one embodiment, the first index and the second index respectively correspond to two different reference signal resource sets, and the first reference signal resource and the second reference signal resource are respectively SRS resources in the two different reference signal resource sets.

Typically, one antenna panel comprises a positive integer number of antennas.

As one embodiment, the first index explicitly indicates the first reference signal resource.

As one embodiment, the first index implicitly indicates the first reference signal resource.

As one embodiment, the first index corresponds to the first reference signal resource, and the second index corresponds to the second reference signal resource.

As one embodiment, the second index explicitly indicates the second reference signal resource.

As one embodiment, the second index implicitly indicates the second reference signal resource.

As one embodiment, the first index is an index of the first reference signal resource in the first reference signal resource set; the first reference signal resource set comprises one or more reference signal resources; the second index is an index of the second reference signal resource in the second reference signal resource set; and the second reference signal resource set comprises one or more reference signal resources.

As one embodiment, the first index is an index of the first reference signal resource in the first reference signal resource set; the first reference signal resource set comprises one or more SRS resources, and the first reference signal resource is one SRS resource; the second index is an index of the second reference signal resource in the second reference signal resource set; and the second reference signal resource set comprises one or more SRS resources, and the second reference signal resource is one SRS resource.

As one embodiment, the first index is used for indicating the first reference signal resource from the first reference signal resource set, and the second index is used for indicating the second reference signal resource from the second reference signal resource set.

As one embodiment, the first reference signal resource set and the second reference signal resource set are both SRS resource sets configured for a codebook-based transmission.

As one embodiment, the first reference signal resource comprises an uplink reference signal resource.

As one embodiment, the first reference signal resource comprises a downlink reference signal resource.

As one embodiment, the first reference signal resource comprises an SRS resource.

As one embodiment, the first reference signal resource comprises a CSI-RS (Channel State Information-Reference Signal) resource.

As one embodiment, the first reference signal resource comprises an SS/PBCH (Synchronization Signal/Physical Broadcast Channel) block.

As one embodiment, the first reference signal resource comprises at least one of the SRS, the CSI-RS or the SS/PBCH block.

As one embodiment, the second reference signal resource comprises the uplink reference signal resource.

As one embodiment, the second reference signal resource comprises the downlink reference signal resource.

As one embodiment, the second reference signal resource comprises the SRS resource.

As one embodiment, the second reference signal resource comprises the CSI-RS (Channel State Information-Reference Signal) resource.

As one embodiment, the second reference signal resource comprises the SS/PBCH (Synchronization Signal/Physical Broadcast Channel) block.

As one embodiment, the second reference signal resource comprises at least one of the SRS resource, the CSI-RS resource or the SS/PBCH block.

As one embodiment, the first reference signal resource is the SRS resource, and the second reference signal resource is the SRS resource.

As one embodiment, the first reference signal resource and the second reference signal resource are both SRS resources configured for the codebook-based transmission.

As one embodiment, the first reference signal resource set comprises at least one of the SRS resource, the CSI-RS resource or the SS/PBCH block, and the second reference signal resource set comprises at least one of the SRS resource, the CSI-RS resource or the SS/PBCH block.

As one embodiment, the first reference signal resource set comprises one or more SRS resources, and the second reference signal resource set comprises one or more SRS resources.

As one embodiment, the first signaling indicates scheduling information of a first transport block and scheduling information of a second transport block, the scheduling information of the first transport block at least comprises the first index, and the scheduling information of the second transport block at least comprises the second index.

As one embodiment, the first signaling indicates scheduling information of the first transport block and scheduling information of the second transport block.

As one embodiment, the scheduling information of the first transport block comprises at least the first index, and the scheduling information of the second transport block comprises the second index.

As one embodiment, the scheduling information of the first transport block at least comprises the first index and a first TPMI; The scheduling information of the second transport block comprises a second index and the second TPMI.

As one embodiment, a full name of TPMI is Transmitted Precoding Matrix Indicator.

As one embodiment, a full name of TPMI is Transmitting Precoding Matrix Indicator.

As one embodiment, a full name of TPMI is Transmission Precoding Matrix Indicator.

As one embodiment, a full name of TPMI is Transmit Precoding Matrix Indicator.

As one embodiment, the scheduling information of the first transport block at least comprises the first index, the first TPMI and the first MCS; and the scheduling information of the second transport block comprises the second index, the second TPMI and the second MCS.

As one embodiment, the first index is for the first transport block, and the second index is for the second transport block.

As one embodiment, the meaning of the sentence that "the first index is for the first transport block, and the second index is for the second transport block" comprises: the first index is used for determining an antenna port for transmitting the first transport block, and the second index is used for determining an antenna port for transmitting the second transport block.

As one embodiment, the meaning of the sentence that "the first index is for the first transport block, and the second index is for the second transport block" comprises: the first signaling indicates the scheduling information of the first transport block and the scheduling information of the second transport block, the scheduling information of the first transport block comprises the first index, and the scheduling information of the second transport block comprises the second index.

As one embodiment, the meaning of the sentence that "the first index is used for determining an antenna port for transmitting the first transport block" comprises: the antenna port of the first transport block is the same as the antenna port of the first reference signal resource; and the meaning of the sentence that "the second index is used for determining an antenna port for transmitting the second transport block" comprises: the antenna port of the second transport block is the same as the antenna port of the second reference signal resource.

As one embodiment, the meaning of the sentence that "the first index is used for determining an antenna port for transmitting the first transport block" comprises: a transmission of the first transport block uses the same antenna port as the first reference signal resource; and the meaning of the sentence that "the second index is used for determining an antenna port for transmitting the second transport block" comprises: a transmission of the second transport block uses the same antenna port as the second reference signal resource.

As one embodiment, the meaning of the sentence that "the first index is used for determining an antenna port for transmitting the first transport block" comprises: the first reference signal resource is the SRS resource, and the transmission of the first transport block uses the same antenna port as an SRS port in the first reference signal resource.

As one embodiment, the meaning of the sentence that "the first index is used for determining an antenna port for transmitting the first transport block" comprises: the first reference signal resource is the CSI-RS resource or the SS/PBCH block, and the antenna port of the first transport block uses the same spatial filter or spatial parameter as that for receiving the first reference signal resource.

As one embodiment, the meaning of the sentence that "the first index is used for determining an antenna port for transmitting the first transport block" comprises: the first reference signal resource is the CSI-RS resource or the SS/PBCH block, and the antenna port of the first transport block uses the same precoder as that for receiving the first reference signal resource.

As one embodiment, the meaning of the sentence that "the second index is used for determining an antenna port for transmitting the second transport block" comprises: the second reference signal resource is the SRS resource, and the transmission of the second transport block uses the same antenna port as the SRS port in the second reference signal resource.

As one embodiment, the meaning of the sentence that "the second index is used for determining an antenna port for transmitting the second transport block" comprises: the second reference signal resource is the CSI-RS resource or the SS/PBCH block, and the antenna port of the second transport block adopts the same spatial filter or spatial parameter as that for receiving the second reference signal resource.

As one embodiment, the meaning of the sentence that "the second index is used for determining the antenna port for transmitting the second transport block" comprises: the second reference signal resource is a CSI-RS resource or an SS/PBCH block, and the antenna port of the second transport block adopts the same precoder as the one for receiving the second reference signal resource.

As one embodiment, when the first target reference signal resource is the first reference signal resource, the first target power value is the first power value, and the first target coefficient is the first coefficient; When the first target reference signal resource is the second reference signal resource, the first target power value is the second power value, and the first target coefficient is the second coefficient.

As one embodiment, the first target reference signal resource is the first reference signal resource, the first target power value is the first power value, and the first target coefficient is the first coefficient.

As one embodiment, the first target reference signal resource is the second reference signal resource, the first target power value is the second power value, and the first target coefficient is a second coefficient.

As one embodiment, whether the first target reference signal resource is the first reference signal resource or the second reference signal resource is predefined.

As one embodiment, whether the first target reference signal resource is the first reference signal resource or the second reference signal resource is configurable.

As one embodiment, whether the first target reference signal resource is the first reference signal resource or the second reference signal resource is indicated by the first signaling.

As one embodiment, whether the first target reference signal resource is the first reference signal resource or the second reference signal resource is determined by the first signaling.

As one embodiment, the meaning of the sentence that "the first target reference signal resource is used for determining an antenna port of the first signal" comprises: the antenna port of the first signal is the same as the antenna port of the first target reference signal resource.

As one embodiment, the meaning of the sentence that "the first target reference signal resource is used for determining an antenna port of the first signal" comprises: the first signal uses the same antenna port as that of the first target reference signal resource.

As one embodiment, the meaning of the sentence that "the first target reference signal resource is used for determining an antenna port of the first signal" comprises: the first target reference signal resource is the SRS resource, and the first signal uses the same antenna port as the SRS port in the first target reference signal resource.

As one embodiment, the meaning of the sentence that "the first target reference signal resource is used for determining an antenna port of the first signal" comprises: the first target reference signal resource is the CSI-RS resource or the SS/PBCH block, and the antenna port of the first signal uses the same spatial filter or spatial parameter as that for receiving the first target reference signal resource.

As one embodiment, the meaning of the sentence that "the first target reference signal resource is used for determining an antenna port of the first signal" comprises: the first target reference signal resource is the CSI-RS resource or the SS/PBCH block, and the antenna port of the first signal uses the same precoder as that for receiving the first target reference signal resource.

As one embodiment, an index of the first transport block is less than an index of the second transport block, and the first target reference signal resource is the first reference signal resource.

As one embodiment, an index of the first transport block is less than an index of the second transport block, and the first target reference signal resource is the second reference signal resource.

As one embodiment, an index of the first transport block is 0, an index of the second transport block is 1, and the first target reference signal resource is the first reference signal resource.

As one embodiment, an index of the first transport block is 0, an index of the second transport block is 1, and the first target reference signal resource is the second reference signal resource.

As one embodiment, an index of the first transport block is 1, an index of the second transport block is 2, and the first target reference signal resource is the first reference signal resource.

As one embodiment, an index of the first transport block is 1, an index of the second transport block is 2, and the first target reference signal resource is the second reference signal resource.

As one embodiment, a linear value of transmission power of the first signal is equal to the product of a linear value of the first target power value and the first target coefficient.

As one embodiment, a linear value of transmission power of the first signal is equal to a minimum value among the product of a linear value of the first target power value and the first target coefficient and a linear value of a first power threshold value.

As one embodiment, the transmission power of the first signal is less than or equal to the first power threshold value.

As one embodiment, a linear value of the transmission power of the first signal is less than or equal to the product of a linear value of the first target power value and the first target coefficient.

As one embodiment, the first power value is less than or equal to the first power threshold value, and the second power value is less than or equal to the first power threshold value.

As one embodiment, an index of the first reference signal resource set is less than a size of an index of the first reference signal resource set, and the first target reference signal resource is the first reference signal resource.

As one embodiment, an index of the first reference signal resource set is less than a size of an index of the first reference signal resource set, and the first target reference signal resource is the second reference signal resource.

### Embodiment 2

Embodiment 2 illustrates a schematic diagram of a network architecture according to one embodiment of the present application, as shown in FIG. 2.

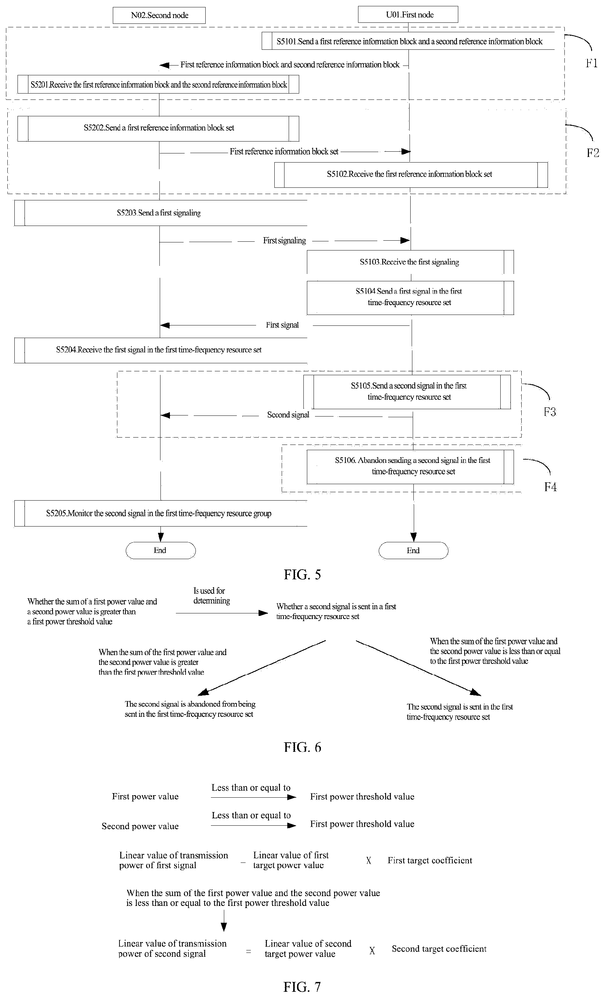

FIG. 2 illustrates a network architecture 200 of LTE (Long-Term Evolution), LTE-A (Long-Term Evolution Advanced) and future 5G systems. The network architecture 200 of LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terms. The 5GS/EPS 200 may comprise one or more pieces of UE (User Equipment) 201, one piece of UE241 communicating with the UE201 via a sidelink, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. 5GS/EPS200 can be interconnected with other access networks, but for simplicity, these entities/interfaces are not shown. As shown in FIG. 2, 5GS/EPS200 provides a packet switching service, but those skilled the art will easily understand that the various concepts presented throughout the present application can be extended to a network that provides a circuit switching service. NG-RAN202 comprises an NR (New Radio) node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmission reception point), or some other suitable terms. The gNB203 provides an access point to 5GC/EPC210 for UE201. Examples of UE201 comprise a cellular phone, a smart phone, a session initiation protocol (SIP) phone, a laptop, a personal digital assistant (PDA), a satellite radio, a global positioning system, a multimedia device, a video device, a digital audio player (e.g., an MP3 player), a camera, a game console, a drone, an aircraft, a narrowband physical network device, a machine type communication device, a land vehicle, an automobile, a wearable device, or any other similar functional device. Those skilled in the art may also call the UE201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable terms. The gNB203 is connected to 5GC/EPC210 by an S1/NG interface. 5GC/EPC210 comprises an MME (Mobility Management Entity)/AMF (Authentication Management Field)/SMF (Session Management Function) 211, other MME/AMF/SMF214, S-GW (Service Gateway)/UPF (User Plane Function) 212, and a P-GW (Packet Data Network Gateway)/UPF213. The MME/AMF/SMF211 is a control node that processes signaling between UE201 and 5GC/EPC210. Generally, the MME/AMF/SMF211 provides bearer and connection management. All user IP (Internet Protocol) packets are communicated by the S-GW/UPF212, and the S-GW/UPF212 is itself connected to P-GW/UPF213. The P-GW provides UE IP address allocation and other functions. The P-GW/UPF213 is connected to the Internet service 230. The Internet service 230 comprises an Internet protocol service corresponding to an operator, which may specifically comprise the Internet, the intranet, an IMS (IP Multimedia Subsystem), and a packet switching service.

As one embodiment, the first node in the present application comprises the UE201.

As one embodiment, the first node in the present application comprises the UE241.

As one embodiment, the second node in the present application comprises the gNB203.

### Embodiment 3

Embodiment 3 illustrates a schematic diagram of an embodiment of radio protocol architectures for a user plane and a control plane according to one embodiment of the present application, as shown in FIG. 3.

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) or between two pieces of UE by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device or between two pieces of UE. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second communication node device. The PDCP sub-layer 304 provides multiplexing between different radio bearer and logical channels. The PDCP sub-layer 304 also provides security by encrypting data packets, and provides zone-crossing mobility support between the second communication node devices for the first communication node device. The RLC sub-layer 303 provides segmentation and reassembly of upper-layer data packets, retransmission of lost data packets, and reordering of data packets to compensate for unordered reception caused by HARQ. The MAC sub-layer 302 provides multiplexing between logical and transmission channels. The MAC sub-layer 302 is also responsible for allocating, between the first communication node devices, various radio resources (for example, resource blocks) in one cell. The MAC sub-layer 302 is also responsible for HARQ operations. The RRC (Radio Resource Control) sub-layer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sub-layer 354 in the L2 layer 355, the RLC sub-layer 353 in the L2 layer 355, and the MAC sub-layer 352 in the L2 layer 355 is substantially the same as that in the control plane 300 for the corresponding layers and sub-layers, but the PDCP sub-layer 354 also provides header compression for upper-layer data packets to reduce radio transmission overhead. The L2 layer 355 in the user plane 350 further comprises an SDAP (Service Data Adaptation Protocol) sub-layer 356, and the SDAP sub-layer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, a first reference information block and a second reference information block are generated in the RRC sub-layer 306.

As one embodiment, a first reference information block and a second reference information block are generated in the MAC sub-layer 302 or the MAC sub-layer 352.

As one embodiment, a first information block set is generated in the RRC sub-layer 306.

As one embodiment, a first information block set is generated in the MAC sub-layer 302.

As one embodiment, a first information block set is generated in the MAC sub-layer 352.

As one embodiment, the first signaling in this matter is generated in the PHY301.

As one embodiment, the first signaling in this matter is generated in the PHY351.

As one embodiment, the first signal is generated in the PHY301.

As one embodiment, the first signal is generated in the PHY351.

As one embodiment, the second signal is generated in the PHY301.

As one embodiment, the second signal is generated in the PHY351.

### Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

A first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

A second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

In a transmission from the first communication device 410 to the second communication device 450, at the first communication device 410, an upper-layer data packet from a core network is provided to the controller/processor 475. The controller/processor 475 implements the functionality of the L2 layer. In DL, the controller/processor 475 provides header compression, encryption, packet segmentation and reordering, multiplexing between logical and transmission channels, and radio resource allocation to the second communication device 450 based on various priority metrics. The controller/processor 475 is also responsible for an HARQ operation and retransmission of a lost packet, and for signaling to the second communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 450, as well as mapping of constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding comprising codebook-based precoding and non-codebook-based precoding, and beamforming processing on the coded and modulated symbols to generate one or more parallel streams. The transmitting processor 416 then maps each parallel stream to a subcarrier, the modulated symbol is multiplexed with a reference signal (for example, a pilot frequency) in the time domain and/or frequency domain, and subsequently an inverse fast Fourier transform (IFFT) is used to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the first communication device 410 to the second communication device 450, at the second communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any parallel stream with the second communication device 450 as the destination. The symbols on each parallel stream are demodulated and recovered in the receiving processor 456, and a soft decision is generated. Subsequently, the receiving processor 456 decodes and deinterleaves the soft decision to recover the upper-layer data and a control signal transmitted by the first communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In DL (DownLink), the controller/processor 459 provides demultiplexing between transmission and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing. The controller/processor 459 is also responsible for performing error detection by using an acknowledgement (ACK) and/or negative acknowledgement (NACK) protocol to support HARQ operations.

In a transmission from the second communication device 450 to the first communication device 410, at the second communication device 450, a data source 467 is used for providing the upper-layer data packet to the controller/processor 459. The data source 467 represents all protocol layers above the L2 layer. Similar to the sending function at the first communication device 410 described in DL, the controller/processor 459 implements header compression, encryption, packet segmentation and reordering, and multiplexing between logical and transmission channels based on wireless resource allocation of the first communication device 410, and implements L2 layer functions for the user plane and the control plane. The controller/processor 459 is also responsible for HARQ operations, retransmission of lost packets, and for signaling to the first communication device 410. The transmitting processor 468 performs modulation mapping and channel coding processing, and the multi-antenna transmitting processor 457 performs digital multi-antenna spatial precoding comprising codebook-based precoding and non-codebook-based precoding, and beamforming processing. Subsequently, the transmitting processor 468 modulates the generated parallel stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the second communication device 450 to the first communication device 410, the function at the first communication device 410 is similar to the receiving function at the second communication device 450 described in the transmission from the first communication device 410 to the second communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. The controller/processor 475 provides demultiplexing between transmission and logical channels, packet reassembly, decryption, header decompression, and control signal processing to recover the upper-layer data packet from the second communication device 450. The upper-layer data packet from the controller/processor 475 can be provided to the core network. The controller/processor 475 is also responsible for performing error detection by using an ACK and/or NACK protocol to support HARQ operations.

As one embodiment, the second communication device 450 comprises: at least one processor and at least one memory, wherein the at least one memory comprises a computer program code; and the at least one memory and the computer program code are configured to be used with the at least one processor. The second communication device 450 device at least: receives first signaling; and sends a first signal in a first time-frequency resource set, wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the second communication device 450 comprises: a memory storing a computer-readable instruction program, wherein the computer-readable instruction program generates actions when executed by at least one processor, and the actions comprise: receiving first signaling; and sending a first signal in a first time-frequency resource set, wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the first communication device 410 comprises: at least one processor and at least one memory, wherein the at least one memory comprises a computer program code; and the at least one memory and the computer program code are configured to be used with the at least one processor. The first communication device 410 device at least sends first signaling; and receiving a first signal in a first time-frequency resource set, wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the first communication device 410 comprises: a memory storing a computer-readable instruction program, wherein the computer-readable instruction program generates actions when executed by at least one processor, and the actions comprise: sending first signaling; and receiving a first signal in a first time-frequency resource set, wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the first node in the present application comprises the second communication device 450.

As one embodiment, the second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving a first information block set in the present application; and at least one of {the antenna 420, the transmitting device 418, the transmitting processor 416, the multi-antenna transmitting processor 471, the controller/processor 475, and the memory 476} is used for sending the first information block set in the present application.

As one embodiment, at least one of {the antenna 452, the receiving device 454, the receiving processor 456, the multi-antenna receiving processor 458, the controller/processor 459, the memory 460, and the data source 467} is used for receiving the first signaling in the present application; and at least one of {the antenna 420, the transmitting device 418, the transmitting processor 416, the multi-antenna transmitting processor 471, the controller/processor 475, and the memory 476} is used for sending the first signaling in the present application.

As one embodiment, at least one of {the antenna 452, the transmitting device 454, the transmitting processor 468, the multi-antenna transmitting processor 457, the controller/processor 459, and the memory 460} is used for sending the first signal in the first time-frequency resource set in the present application; and At least one of {the antenna 420, the receiving device 418, the receiving processor 470, the multi-antenna receiving processor 472, the controller/processor 475, and the memory 476} is used for receiving the first signal in the first time-frequency resource set in the present application.

As one embodiment, at least one of {the antenna 452, the transmitting device 454, the transmitting processor 468, the multi-antenna transmitting processor 457, the controller/processor 459, and the memory 460} is used for sending a second signal in the first time-frequency resource set in the present application; and at least one of {the antenna 420, the receiving device 418, the receiving processor 470, the multi-antenna receiving processor 472, the controller/processor 475, and the memory 476} is used for receiving the second signal in the first time-frequency resource set in the present application.

As one embodiment, at least one of {the antenna 452, the transmitting device 454, the transmitting processor 468, the multi-antenna transmitting processor 457, the controller/processor 459, and the memory 460} is used for sending the second signal in the first time-frequency resource set in the present application; and

As one embodiment, at least one of {the antenna 420, the receiving device 418, the receiving processor 470, the multi-antenna receiving processor 472, the controller/processor 475, and the memory 476} is used for monitoring the second signal in the first time-frequency resource set in the present application.

As one embodiment, at least one of {the antenna 452, the transmitting device 454, the transmitting processor 468, the multi-antenna transmitting processor 457, the controller/processor 459, and the memory 460} is used for receiving a first reference information block and a second reference information block in the present application; and at least one of {the antenna 420, the receiving device 418, the receiving processor 470, the multi-antenna receiving processor 472, the controller/processor 475, and the memory 476} is used for receiving the first reference information block and the second reference information block in the present application.

### Embodiment 5

Embodiment 5 illustrates a flow chart of wireless transmission according to one embodiment of the present application, as shown in FIG. 5. In FIG. 5, a first node U01 and a second node N02 are respectively two communication nodes for a transmission by an air interface, wherein the steps in blocks F1 and F2 are alternative.

For **the first node U01,** in step S5101, a first reference information block and a second reference information block are sent; in step S5102, a first information block set is received; first signaling is received in step S5103; in step S5104, a first signal is sent in a first time-frequency resource set; in step S5105, a second signal is sent in a first time-frequency resource set; and in step S5106, the second signal is abandoned from being sent in the first time-frequency resource set;
for **the second node N02,** in step S5201, a first reference information block and a second reference information block are received; in step S5202, the first information block set is sent; in step S5203, the first signaling is sent; in step S5204, the first signal is received in the first time-frequency resource set; and In step S5205, the second signal is monitored in the first time-frequency resource set;
in Embodiment 5, the first signaling is used for indicating the first time-frequency resource set; the first signaling is used for indicating a first index and a second index, the first index is used for indicating a first reference signal resource, and the second index is used for indicating a second reference signal resource; the first index is used by the first node U01 for determining a first power value, and the second index is used by the first node U01 for determining a second power value; a first target reference signal resource is used for determining an antenna port of the first signal, and the first target reference signal resource is the first reference signal resource or the second reference signal resource; the product of a linear value of a first target power value and a first target coefficient is used by the first node U01 for determining a linear value of transmission power of the first signal; and the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, the behavior that "a first signal is received in a first time-frequency resource set" and the behavior that "a second signal is monitored in the first time-frequency resource set" are simultaneously performed.

As one embodiment, the behavior that "a first signal is received in a first time-frequency resource set" and the behavior that "a second signal is monitored in the first time-frequency resource set" are not simultaneously performed.

As one embodiment, the first node monitors a first signal group in the first time-frequency resource set; the first signal group comprises the first signal and the second signal; and the behavior that "monitors a first signal group in the first time-frequency resource set" comprises the behavior that "a first signal is received in a first time-frequency resource set" and the behavior that "a second signal is monitored in the first time-frequency resource set".

As one embodiment, the time-frequency resources occupied by the first signal overlap the time-frequency resources occupied by the second signal.

As one embodiment, the time domain resources occupied by the first signal overlap the time domain resources occupied by the second signal.

As one embodiment, the frequency domain resources occupied by the first signal are orthogonal to the frequency domain resources occupied by the second signal, and the time domain resources occupied by the first signal overlap the time domain resources occupied by the second signal.

Typically, the meaning of "overlap" comprises: partially or completely overlap.

As one embodiment, it comprises:
the first transmitter for sending a second signal in the first time-frequency resource set,
wherein the sum of transmission power of the first signal and transmission power of the second signal is less than or equal to a first power threshold value.

As one embodiment, when the second node detects that the second signal is sent, the behavior that "a second signal is monitored in the first time-frequency resource set" comprises: the second signal is received in the first time-frequency resource set.

As one embodiment, when the second signal is sent, the behavior that "a second signal is monitored in the first time-frequency resource set" comprises: the second signal is received in the first time-frequency resource set.

As one embodiment, the behavior that "a second signal is monitored in the first time-frequency resource set" comprises: whether the second signal is sent is monitored in the first time-frequency resource set.

As one embodiment, the behavior that "a second signal is monitored in the first time-frequency resource set" comprises: whether the second signal is sent in the first time-frequency resource set is determined according to power of the received signal in the first time-frequency resource set.

As one sub-embodiment of the above-mentioned embodiment, if the power of the received signal in the first time-frequency resource set is low, it is considered that the second signal is not sent in the first time-frequency resource set; or it is considered that the second signal is sent in the first time-frequency resource set.

As one sub-embodiment of the above-mentioned embodiment, if the power of the received signal in the first time-frequency resource set is lower than a reference power threshold value, it is considered that the second signal is not sent in the first time-frequency resource set; or it is considered that the second signal is sent in the first time-frequency resource set; and the reference power threshold value is configured by a base station device.

As one embodiment, the behavior that "a second signal is monitored in the first time-frequency resource set" comprises: whether the second signal is sent in the first time-frequency resource set is judged according to a correlation between the received signal in the first time-frequency resource set and the second signal.

As one sub-embodiment of the above-mentioned embodiment, if the correlation between the received signal in the first time-frequency resource set and the second signal is low, it is considered that the second signal is sent in the first time-frequency resource set; or it is considered that the second signal is sent in the first time-frequency resource set.

As one sub-embodiment of the above-mentioned embodiment, if the correlation between the received signal in the first time-frequency resource set and the second signal is lower than a reference correlation threshold value, it is considered that the second signal is not sent in the first time-frequency resource set; or it is considered that the second signal is sent in the first time-frequency resource set; and the reference correlation threshold value is configured by the base station device itself.

As one embodiment, the behavior that "a second signal is monitored in the first time-frequency resource set" comprises: the received signal in the first time-frequency resource set is measured according to a configuration parameter of the second signal, to estimate a channel, and whether the second signal is sent in the first time-frequency resource set is judged according to an estimated channel.

As one sub-embodiment of the above-mentioned embodiment, if energy of the estimated channel is low, it is considered that the second signal is not sent in the first time-frequency resource set; or it is considered that the second signal is sent in the first time-frequency resource set.

As one sub-embodiment of the above-mentioned embodiment, if energy of the estimated channel is lower than a reference channel energy threshold value, it is considered that the second signal is not sent in the first time-frequency resource set; or it is considered that the second signal is sent in the first time-frequency resource set; and the reference channel energy threshold is configured by the base station device itself.

As one sub-embodiment of the above-mentioned embodiment, if power of the estimated channel is low, it is considered that the second signal is not sent in the first time-frequency resource set; or it is considered that the second signal is sent in the first time-frequency resource set.

As one sub-embodiment of the above-mentioned embodiment, if power of the estimated channel is lower than a reference channel power threshold value, it is considered that the second signal is not sent in the first time-frequency resource set; or it is considered that the second signal is sent in the first time-frequency resource set; and the reference channel power threshold value is configured by the base station itself.

As one sub-embodiment of the above-mentioned embodiment, if a characteristic of the channel estimated do not meet the characteristic that should be considered, it is considered that the second signal is not sent in the first time-frequency resource set; or it is considered that the second signal is sent in the first time-frequency resource set.

As one embodiment, a second target reference signal resource is used for determining an antenna port of the second signal, and the second target reference resource is a reference signal resource other than the first target reference signal resource in the first reference signal resource and the second reference signal resource.

As one embodiment, a first target reference resource is the first reference signal resource, and the reference signal resource other than the first target reference signal resource in the first reference signal resource and the second reference signal resource is the second reference signal resource.

As one embodiment, the first target reference resource is the second reference signal resource, and the reference signal resource other than the first target reference signal resource in the first reference signal resource and the second reference signal resource is the first reference signal resource.

As one embodiment, the meaning of the sentence that "a second target reference signal resource is used for determining an antenna port of the second signal" comprises: the antenna port of the second signal is the same as an antenna port of the second target reference signal resource.

As one embodiment, the meaning of the sentence that "a second target reference signal resource is used for determining an antenna port of the second signal" comprises: the second signal uses the same antenna port as that of the second target reference signal resource.

As one embodiment, the meaning of the sentence that "a second target reference signal resource is used for determining an antenna port of the second signal" comprises: the second target reference signal resource is an SRS resource, and the second signal uses the same antenna port as that of an SRS port in the second target reference signal resource.

As one embodiment, the meaning of the sentence that "a second target reference signal resource is used for determining an antenna port of the second signal" comprises: the second target reference signal resource is a CSI-RS resource or an SS/PBCH block, and the antenna port of the second signal uses the same spatial filter or spatial parameter as that for receiving the second target reference signal resource.

As one embodiment, the meaning of the sentence that "a second target reference signal resource is used for determining an antenna port of the second signal" comprises: the second target reference signal resource is the CSI-RS resource or the SS/PBCH block, and the antenna port of the second signal uses the same precoder as that for receiving the second target reference signal resource.

As one embodiment, the second signal comprises a baseband signal.

As one embodiment, the second signal comprises a wireless signal.

As one embodiment, the second signal comprises a radio frequency signal.

As one embodiment, the second signal is transmitted on an uplink physical channel.

As one embodiment, the second signal is transmitted on a physical channel.

As one embodiment, the second signal is transmitted on a PUSCH.

As one embodiment, the second signal carries a positive integer number of transport blocks (TBs).

As one embodiment, the second signal carries one transport block.

As one embodiment, the second signal comprises parts of the layers of the PUSCH in which it is located.

As one embodiment, the second signal comprises all the layers of the PUSCH where it is located.

As one embodiment, the second signal comprises parts or all of the layers of the PUSCH where it is located.

As one embodiment, the second signal is transmitted on a codebook based PUSCH.

As one embodiment, the first signaling schedules a PUSCH of N layers, the first signal carries N1 layers of the N layers, the second signal carries N2 layers of the N layers, the sum of N1 and N2 is equal to N, and N1, N2 and N are all positive integers.

As one embodiment, the first signal and the second signal respectively comprise different layers of the PUSCH scheduled by the first signaling.

As one embodiment, the first signal and the second signal are respectively used for carrying different layers of the PUSCH scheduled by the first signaling.

As one embodiment, the first signal and the second signal are respectively two PUSCH repetitions scheduled by the first signaling.

As one embodiment, one PUSCH comprises the first signal and the second signal.

As one embodiment, the first signal and the second signal respectively carry different transport blocks.

As one embodiment, the first signal and the second signal jointly carry the same one transport block.

As one embodiment, the first signal and the second signal respectively comprise different transport blocks of the PUSCH scheduled by the first signaling.

As one embodiment, when the second signal is sent, the first signal and the second signal jointly carry the same one transport block.

As one embodiment, the first signaling indicates scheduling information of the first transport block and scheduling information of the second transport block; One of the first transport block and the second transport block is carried by the first signal; and when the second signal is sent, the other one of the first transport block and the second transport block is carried by the second signal.

As one embodiment, the first signaling indicates scheduling information of the first transport block and scheduling information of the second transport block; One of the first transport block and the second transport block is carried by the first signal; and the other one of the first transport block and the second transport block is carried by the second signal.

As one embodiment, the first signal and the second signal are transmitted on the same one PUSCH.

As one embodiment, the first signal and the second signal jointly constitute one PUSCH repetition.

As one embodiment, the second signal carries at least one code block group (CBG).

As one embodiment, the first signaling indicates the scheduling information of the second signal.

As one embodiment, the first signaling indicates the scheduling information of the first signal and the scheduling information of the second signal.

As one embodiment, the scheduling information of the first signal comprises one of the scheduling information of the first transport block and the scheduling information of the second transport block, and the scheduling information of the second signal comprises the other piece of the scheduling information of the first transport block and the scheduling information of the second transport block.

As one embodiment, the scheduling information of the second signal comprises at least one of an occupied time domain resource, an occupied frequency domain resource, an MCS (Modulation and Coding Scheme), DMRS (DeModulation Reference Signal) configuration information, an HARQ (Hybrid Automatic Repeat reQuest) process number (Process Number), an RV (Redundancy version), a NDI (New Data Indicator), a number of layers (Number of Layer(s)), an antenna port, a TCI state, an SRS (Sounding Reference Signal) resource indicator, or a PMI (Precoding Matrix Indicator).

As one embodiment, the scheduling information of the second signal comprises at least one of an MCS (Modulation and Coding Scheme), DMRS (DeModulation Reference Signal) configuration information, an HARQ (Hybrid Automatic Repeat reQuest) process number (Process Number), RV (Redundancy version), a NDI (New Data Indicator), a number of layers (Number of Layer(s)), an antenna port, a TCI state, an SRS (Sounding Reference Signal) resource indicator, or a PMI (Precoding Matrix Indicator).

As one embodiment, the first target coefficient is the first coefficient or the second coefficient, and the first target power value is the first power value or the second power value.

Typically, the first target coefficient and the first target power value depend on whether the first target reference signal resource is the first reference signal resource or the second reference signal resource.

Typically, whether the first target coefficient is the first coefficient or the second coefficient depends on whether the first target reference signal resource is the first reference signal resource or the second reference signal resource.

Typically, whether the first target power value is the first power value or the second power value depends on whether the first target reference signal resource is the first reference signal resource or the second reference signal resource.

Typically, the unit of the first power value is dBm (millidecibel), the unit of the second power value is dBm, the unit of the first power threshold value is dBm (millidecibel), the unit of the transmission power of the first signal is dBm (millidecibel), the unit of the transmission power of the second signal is dBm (millidecibel), the unit of a linear value of the first power value is mW (milli-watt), the unit of a linear value of the second power value is mW, the unit of a linear value of the first power threshold is mW, the unit of a linear value of the transmission power of the first signal is mW, and the unit of a linear value of the transmission power of the second signal is mW.

As one embodiment, the first power value is equal to a 10-base logarithm of a linear value of the first power value multiplied by 10, the second power value is equal to a 10-base logarithm of a linear value of the second power value multiplied by 10, the first power threshold value is equal to a 10-base logarithm of a linear value of the first power threshold value multiplied by 10, the transmission power of the first signal is equal to a 10-base logarithm of a linear value of the transmission power of the first signal multiplied by 10, and the transmission power of the second signal is equal to a 10-base logarithm of a linear value of the transmission power of the second signal multiplied by 10.

As one embodiment, a linear value of a given power value is p, and the given power value is 10lg(*p*).

As one sub-embodiment of the above-mentioned embodiment, the given power is the first power value.

As one sub-embodiment of the above-mentioned embodiment, the given power is the second power value.

As one sub-embodiment of the above-mentioned embodiment, the given power is the first power threshold value.

As one sub-embodiment of the above-mentioned embodiment, the given power is the transmission power of the first signal.

As one sub-embodiment of the above-mentioned embodiment, the given power is the transmission power of the second signal.

As one embodiment, the first target coefficient is 1.

As one embodiment, the first target coefficient is a positive real number not greater than 1.

As one embodiment, the first target coefficient is a positive real number of 1 or less than 1.

As one embodiment, the first target coefficient is the number of non-zero-power antenna ports of the first signal divided by the number of ports of the first target reference signal resource.

As one embodiment, the first coefficient is 1.

As one embodiment, the first coefficient is a positive real number not greater than 1.

As one embodiment, the first coefficient is a positive real number of 1 or less than 1.

As one embodiment, the second coefficient is 1.

As one embodiment, the second coefficient is a positive real number not greater than 1.

As one embodiment, the second coefficient is a positive real number of 1 or less than 1.

As one embodiment, the first coefficient and the second coefficient are respectively determined.

As one embodiment, the first coefficient and the second coefficient are respectively determined by a TPMI of a corresponding transport block.

As one embodiment, the first coefficient and the second coefficient are respectively determined by a TPMI of a corresponding codeword.

As one embodiment, the first coefficient and the second coefficient are respectively configured.

As one embodiment, the first signaling indicates a first TPMI and a second TPMI, the first TPMI is used for determining the first coefficient, and the second TPMI is used for determining the second coefficient.

As one embodiment, the first signaling indicates the first TPMI and the second TPMI, the first coefficient is the number of non-all-zero rows of the first TPMI divided by the number of ports of the first reference signal resource, and the second coefficient is the number of non-all-zero rows of the second TPMI divided by the number of ports of the second reference signal resource.

As one embodiment, the first signaling indicates a first TPMI and a second TPMI, the first coefficient is the number of non-zero-power antenna ports of the first TPMI divided by the number of ports of the first reference signal resource, and the second coefficient is the number of non-zero-power antenna ports of the second TPMI divided by the number of ports of the second reference signal resource.

As one embodiment, the first signaling indicates a first TPMI and a second TPMI, the first coefficient is the number of non-zero-power antenna ports of the first TPMI divided by the total number of ports of the first TPMI, and the second coefficient is the number of non-zero-power antenna ports of the second TPMI divided by the total number of ports of the second TPMI.

As one embodiment, the first signaling indicates a first TPMI and a second TPMI, the first coefficient is the number of non-zero rows of the first TPMI divided by the total number of rows of the first TPMI, and the second coefficient is the number of non-zero rows of the second TPMI divided by the total number of rows of the second TPMI.

As one embodiment, two domains in the first signaling respectively indicate the first TPMI and the second TPMI.

As one sub-embodiment of the above-mentioned embodiment, the names of the two domains in the first signaling both comprise Precoding.

As one embodiment, the same one domain in the first signaling indicates the first TPMI and the second TPMI.

As one sub-embodiment of the above-mentioned embodiment, the name of the same one field in the first signaling comprises Precoding.

As one embodiment, the Precoding information and number of layers field in the first signaling indicates the first TPMI, and the second Precoding information field in the first signaling indicates the second TPMI.

As one embodiment, the Precoding information and number of layers field in the first signaling indicates the first TPMI, and the second Precoding information field in the first signaling indicates the second TPMI; and or the Precoding information and number of layers field in the first signaling indicates the second TPMI, and the second Precoding information field in the first signaling indicates the first TPMI.

As one embodiment, the sum of the first power value and the second power value is used for determining whether the second signal is sent in the first time-frequency resource set.

As one embodiment, a size relationship between the first power value and the second power value is used for determining whether the second signal is sent in the first time-frequency resource set; and when the first power value is equal to or greater than the second power value, the second signal is abandoned from being sent in the first time-frequency resource set.

As one embodiment, the first power value is used for determining a third power value, the second power value is used for determining a fourth power value, and the third power value and the fourth power value are used for determining whether the second signal is sent in the first time-frequency resource set.

As one embodiment, the first power value is used for determining a third power value, the second power value is used for determining the fourth power value, and whether the sum of the third power value and the fourth power value is greater than the first power threshold value is used for determining whether the second signal is sent in the first time-frequency resource set.

As one embodiment, the first power value is used for determining a third power value, the second power value is used for determining the fourth power value, and whether the sum of the third power value and the fourth power value is greater than the first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

### Embodiment 6

Embodiment 6 illustrates a schematic diagram of determining whether a second signal is sent in a first time-frequency resource set according to one embodiment of the present application, as shown in FIG. 6.

In Embodiment 6, whether the sum of a first power value and a second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

As one embodiment, a first signal and the second signal respectively correspond to a first transport block and a second transport block, and first signaling is used for indicating scheduling information of the first transport block and scheduling information of the second transport block.

### Embodiment 7

Embodiment 7 illustrates a schematic diagram of transmission power of a first signal and transmission power of a second signal according to one embodiment of the present application; and as shown in FIG. 7.

In Embodiment 7, a first power value is less than or equal to a first power threshold value, and a second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

As one embodiment, the first target power value is the first power value, and the power value other than the first target power value among the first power value and the second power value is the second power value.

As one embodiment, the first target power value is the second power value, and the power value other than the first target power value among the first power value and the second power value is the first power value.

As one embodiment, the first target power value is the first power value, and the second target power value is the second power value; or the first target power value is the second power value, and the second target power value is the first power value.

As one embodiment, the first target power value is the first power value, and the second target power value is the second power value.

As one embodiment, the first target power value is the second power value, and the second target power value is the first power value.

As one embodiment, the first target coefficient is the first coefficient, and the coefficient other than the first target coefficient among the first coefficient and the second coefficient is the second coefficient.

As one embodiment, the first target coefficient is the second coefficient, and the coefficient other than the first target coefficient among the first coefficient and the second coefficient is the first coefficient.

As one embodiment, the first target coefficient is the first coefficient, and the second target coefficient is the second coefficient; or the first target coefficient is the second coefficient, and the second target coefficient is the first coefficient.

As one embodiment, the first target coefficient is the first coefficient, and the second target coefficient is the second coefficient.

As one embodiment, the first target coefficient is the second coefficient, and the second target coefficient is the first coefficient.

### Embodiment 8

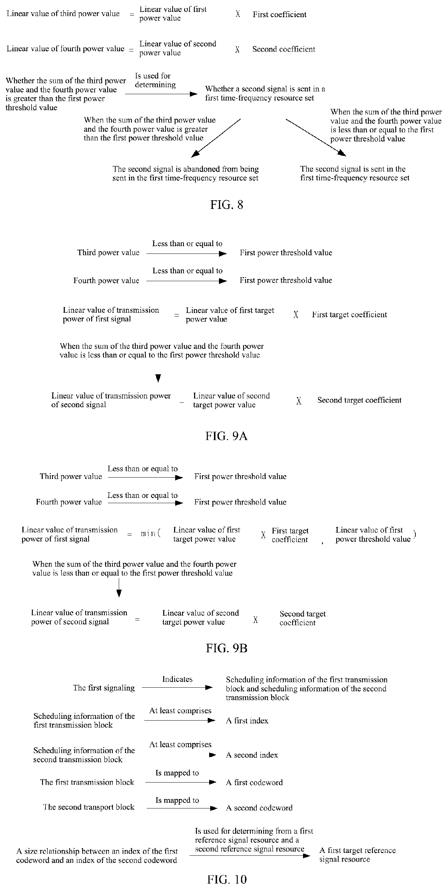

Embodiment 8 illustrates a schematic diagram of determining whether a second signal is sent in a first time-frequency resource set according to another embodiment of the present application, as shown in FIG. 8.

In Embodiment 8, a linear value of a third power value is the product of a linear value of a first power value and a first coefficient, a linear value of a fourth power value is the product of a linear value of a second power value and a second coefficient, and whether the sum of the third power value and the fourth power value is greater than a first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

### Embodiments 9A-9B

Embodiments 9A-9B respectively illustrate a schematic diagram of transmission power of a first signal and transmission power of a second signal according to another embodiment of the present application, as shown in FIGS. 9A-9B.

In Embodiment 9A, a third power value is less than or equal to a first power threshold value, and a fourth power value is less than or equal to the first power threshold value; a linear value of the transmission power of the first signal is equal to the product of a linear value of the first target power value and the first target coefficient; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

In Embodiment 9B, a third power value is less than or equal to a first power threshold value, and a fourth power value is less than or equal to the first power threshold value; a linear value of the transmission power of the first signal is equal to a minimum value among the product of a linear value of the first target power value and the first target coefficient and a linear value of the first power threshold value. when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

### Embodiment 10

Embodiment 10 illustrates a schematic diagram of a first target reference signal resource according to one embodiment of the present application, as shown in FIG. 10.

In Embodiment 10, the first signaling indicates scheduling information of a first transport block and scheduling information of a second transport block, the scheduling information of the first transport block at least comprises a first index, the scheduling information of the second transport block at least comprises a second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

As one embodiment, the index of the first codeword and the index of the second codeword are two different non-negative integers.

As one embodiment, the index of the first codeword is 0, and the index of the second codeword is 1.

As one embodiment, the index of the first codeword is 1, and the index of the second codeword is 0.

As one embodiment, the index of the first codeword is 0, and the index of the second codeword is 1; or the index of the first codeword is 1, and the index of the second codeword is 0.

As one embodiment, the index of the first codeword is less than the index of the second codeword, and the first target reference signal resource is the first reference signal resource.

As one embodiment, the index of the first codeword is less than the index of the second codeword, and the first target reference signal resource is the second reference signal resource.

As one embodiment, when the index of the first codeword is less than the index of the second codeword, the first target reference signal resource is the first reference signal resource; and when the index of the first codeword is greater than the index of the second codeword, the first target reference signal resource is the second reference signal resource.

As one embodiment, when the index of the first codeword is greater than the index of the second codeword, the first target reference signal resource is the first reference signal resource; and when the index of the first codeword is less than the index of the second codeword, the first target reference signal resource is the second reference signal resource.

As one embodiment, when the index of the first codeword is 0 and the index of the second codeword is 1, the first target reference signal resource is the first reference signal resource; and when the index of the first codeword is 1 and the index of the second codeword is 0, the first target reference signal resource is the second reference signal resource.

As one embodiment, the index of the first codeword is 0 and the index of the second codeword is 1, and the first target reference signal resource is the first reference signal resource.

As one embodiment, the index of the first codeword is 0 and the index of the second codeword is 1, and the first target reference signal resource is the second reference signal resource.

As one embodiment, when the index of the first codeword is 0 and the index of the second codeword is 1, the first target reference signal resource is the second reference signal resource; and when the index of the first codeword is 1 and the index of the second codeword is 0, the first target reference signal resource is the first reference signal resource.

### Embodiment 11A-11D

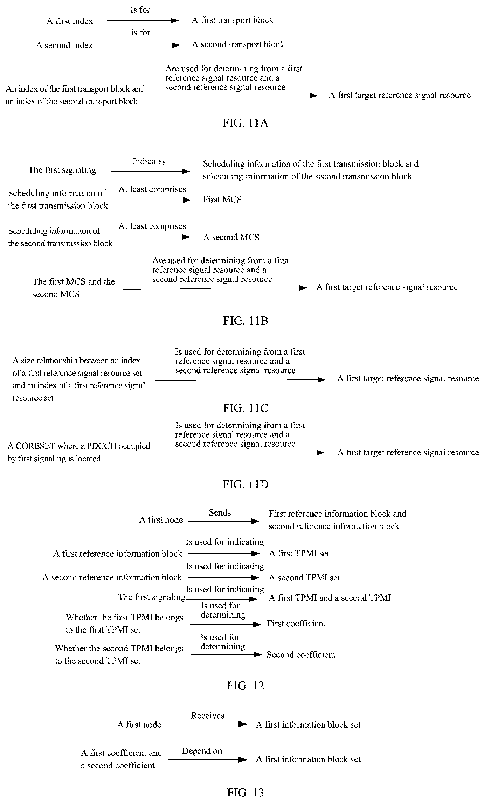

Embodiments 11A-11D respectively illustrate a schematic diagram of a first target reference signal resource according to another embodiment of the present application, as shown in FIG. 11A-11D.

In Embodiment 11A, a first index is for a first transport block, and a second index is for a second transport block; and an index of the first transport block and an index of the second transport block are used for determining the first target reference signal resource from a first reference signal resource and a second reference signal resource.

As one embodiment, the index of the first transport block and the index of the second transport block are two different non-negative integers.

As one embodiment, the index of the first transport block and the index of the second transport block are two different positive integers.

As one embodiment, the index of the first transport block is 0 and the index of the second transport block is 1.

As one embodiment, the index of the first transport block is 1 and the index of the second transport block is 0.

As one embodiment, the index of the first transport block is 0 and the index of the second transport block is 1; or the index of the first transport block is 1 and the index of the second transport block is 0.

As one embodiment, the index of the first transport block is 1 and the index of the second transport block is 2.

As one embodiment, the index of the first transport block is 2 and the index of the second transport block is 1.

As one embodiment, the index of the first transport block is 1 and the index of the second transport block is 2; or the index of the first transport block is 2 and the index of the second transport block is 1.

As one embodiment, when the index of the first transport block is less than the index of the second transport block, the first target reference signal resource is the first reference signal resource; and when the index of the first transport block is greater than the index of the second transport block, the first target reference signal resource is the second reference signal resource.

As one embodiment, when the index of the first transport block is greater than the index of the second transport block, the first target reference signal resource is the first reference signal resource; and when the index of the first transport block is less than the index of the second transport block, the first target reference signal resource is the second reference signal resource.

As one embodiment, when the index of the first transport block is 0 and the index of the second transport block is 1, the first target reference signal resource is the first reference signal resource; and when the index of the first transport block is 1 and the index of the second transport block is 0, the first target reference signal resource is the second reference signal resource.

As one embodiment, when the index of the first transport block is 0 and the index of the second transport block is 1, the first target reference signal resource is the second reference signal resource; and when the index of the first transport block is 1 and the index of the second transport block is 0, the first target reference signal resource is the first reference signal resource.

As one embodiment, when the index of the first transport block is 1 and the index of the second transport block is 2, the first target reference signal resource is the first reference signal resource; and when the index of the first transport block is 2 and the index of the second transport block is 1, the first target reference signal resource is the second reference signal resource.

As one embodiment, when the index of the first transport block is 1 and the index of the second transport block is 2, the first target reference signal resource is the second reference signal resource; and when the index of the first transport block is 2 and the index of the second transport block is 1, the first target reference signal resource is the first reference signal resource.

In Embodiment 11B, first signaling indicates scheduling information of the first transport block and scheduling information of the second transport block, the scheduling information of the first transport block at least comprises a first MCS, the scheduling information of the second transport block at least comprises a second MCS, and the first MCS and the second MCS are used for determining the first target reference signal resource from the first reference signal resource and the second reference signal resource.

As one embodiment, a size relationship between an index of the first MCS and an index of the second MCS is used for determining the first target reference signal resource from the first reference signal resource and the second reference signal resource.

As one sub-embodiment of the above-mentioned embodiment, when the index of the first MCS is less than the index of the second MCS, the first target reference signal resource is the first reference signal resource; and when the index of the first MCS is greater than the index of the second MCS, the first target reference signal resource is the second reference signal resource.

As one sub-embodiment of the above-mentioned embodiment, when the index of the first MCS is greater than the index of the second MCS, the first target reference signal resource is the first reference signal resource; and when the index of the first MCS is less than the index of the second MCS, the first target reference signal resource is the second reference signal resource.

As one sub-embodiment of the above-mentioned embodiment, when the index of the first MCS is equal to the index of the second MCS, the first target reference signal resource is the first reference signal resource.

As one sub-embodiment of the above-mentioned embodiment, when the index of the first MCS is equal to the index of the second MCS, the first target reference signal resource is the second reference signal resource.

As one embodiment, a size relationship between a spectral efficiency of the first MCS and a spectral efficiency of the second MCS is used for determining the first target reference signal resource from the first reference signal resource and the second reference signal resource.

As one sub-embodiment of the above-mentioned embodiment, when the spectral efficiency of the first MCS is greater than the spectral efficiency of the second MCS, the first target reference signal resource is the first reference signal resource; and when the spectral efficiency of the first MCS is less than the spectral efficiency of the second MCS, the first target reference signal resource is the second reference signal resource.

As one sub-embodiment of the above-mentioned embodiment, when the spectrum efficiency of the first MCS is less than the spectrum efficiency of the second MCS, the first target reference signal resource is the first reference signal resource; and when the spectrum efficiency of the first MCS is greater than the spectrum efficiency of the second MCS, the first target reference signal resource is the second reference signal resource.

As one sub-embodiment of the above-mentioned embodiment, when the spectral efficiency of the first MCS is equal to the spectral efficiency of the second MCS, the first target reference signal resource is the first reference signal resource.

As one sub-embodiment of the above-mentioned embodiment, when the spectrum efficiency of the first MCS is equal to the spectrum efficiency of the second MCS, the first target reference signal resource is the second reference signal resource.

In Embodiment 11C, the first index is an index of the first reference signal resource in a first reference signal resource set; the first reference signal resource set comprises one or more SRS resources, and the first reference signal resource is one SRS resource; the second index is an index of the second reference signal resource in a second reference signal resource set; the second reference signal resource set comprises one or more SRS resources, and the second reference signal resource is one SRS resource; and a size relationship between an index of the first reference signal resource set and an index of the first reference signal resource set is used for determining the first target reference signal resource from the first reference signal resource and the second reference signal resource.

As one embodiment, when the index of the first reference signal resource set is less than a size of the index of the first reference signal resource set, the first target reference signal resource is the first reference signal resource; and when the index of the first reference signal resource set is greater than the size of the index of the first reference signal resource set, the first target reference signal resource is the second reference signal resource.

As one embodiment, when the index of the first reference signal resource set is greater than the size of the index of the first reference signal resource set, the first target reference signal resource is the first reference signal resource; and when the index of the first reference signal resource set is less than the size of the index of the first reference signal resource set, the first target reference signal resource is the second reference signal resource.

In Embodiment 11D, a CORESET (COntrol REsource SET) where a PDCCH occupied by the first signaling is located is used for determining the first target reference signal resource from the first reference signal resource and the second reference signal resource.

As one embodiment, the CORESET where the PDCCH occupied by the first signaling is located belongs to a first CORESET pool or a second CORESET pool, the first CORESET pool comprises at least one CORESET, and the second CORESET pool comprises at least one CORESET; when the CORESET where the PDCCH occupied by the first signaling is located belongs to the first CORESET pool, the first target reference signal resource is the first reference signal resource; and when the CORESET where the PDCCH occupied by the first signaling is located belongs to the second CORESET pool, the first target reference signal resource is the second reference signal resource.

As one embodiment, when the CORESET where the PDCCH occupied by the first signaling is located belongs to a third CORESET pool, the first target reference signal resource is the first reference signal resource; when the CORESET where the PDCCH occupied by the first signaling is located does not belong to the third CORESET pool, the first target reference signal resource is the second reference signal resource; and the third CORESET pool comprises at least one CORESET.

As one embodiment, when the CORESET where the PDCCH occupied by the first signaling is located does not belong to the third CORESET pool, the first target reference signal resource is the first reference signal resource; when the CORESET where the PDCCH occupied by the first signaling is located belongs to the third CORESET pool, the first target reference signal resource is the second reference signal resource; and the third CORESET pool comprises at least one CORESET.

### Embodiment 12

Embodiment 12 illustrates a schematic diagram of a first coefficient and a second coefficient according to one embodiment of the present application, as shown in FIG. 12.

In Embodiment 12, a first node in the present application sends a first reference information block and a second reference information block, wherein the first reference information block is used for indicating a first TPMI set, and the second reference information block is used for indicating a second TPMI set; the first signaling is used for indicating a first TPMI and a second TPMI; and whether the first TPMI belongs to the first TPMI set is used for determining the first coefficient, and whether the second TPMI belongs to the second TPMI set is used for determining the second coefficient.

As one embodiment, the first reference information block and the second reference information block are carried by RRC signaling.

As one embodiment, the first reference information block and the second reference information block are carried by MAC CE signaling.

As one embodiment, the first reference information block and the second reference information block are user equipment capability parameters.

As one embodiment, the first reference information block comprises parts or all of fields in a user equipment capability IE, and the second reference information block comprises parts or all of fields in the user equipment capability IE.

As one embodiment, the first reference information block comprises parts or all of fields in IE FeatureSetUplink.

As one embodiment, the first reference information block comprises ul-FullPwrMode2-TPMIGroup-r16.

As one embodiment, the name of the first reference information block comprises ul-FullPwrMode2-TPMIGroup.

As one embodiment, the name of the first reference information block comprises ul-FullPwr.

As one embodiment, the name of the first reference information block comprises TPMIGroup.

As one embodiment, the second reference information block comprises ul-FullPwrMode2-TPMIGroup-r16.

As one embodiment, the name of the second reference information block comprises ul-FullPwrMode2-TPMIGroup.

As one embodiment, the name of the second reference information block comprises ul-FullPwr.

As one embodiment, the name of the second reference information block comprises TPMIGroup.

As one embodiment, a first TPMI set delivers full power.

As one embodiment, a second TPMI set delivers full power.

As one embodiment, a precoded PUSCH indicated by any TPMI in the first TPMI set is transmitted at full power.

As one embodiment, the first TPMI set supports full power.

As one embodiment, the second TPMI set supports full power.

As one embodiment, the specific definition of the ul-FullPwrMode2-TPMIGroup-r16 can refer to 3GPP TS38.306.

As one embodiment, the specific definitions of the IE FeatureSetUplink and the ul-FullPwrMode2-TPMIGroup-r16 can refer to 3GPP TS38.331.

As one embodiment, a first target TPMI indicates precoding of a first signal, and a first target TPMI is the first TPMI or the second TPMI; and the first target reference signal resource is the first reference signal resource and the first target TPMI is the first TPMI, or the first target reference signal resource is the second reference signal resource and the first target TPMI is the second TPMI.

As one embodiment, the first signaling indicates scheduling information of the first transport block and scheduling information of the second transport block, the scheduling information of the first transport block comprises at least the first TPMI, and the scheduling information of the second transport block comprises at least the second TPMI.

As one embodiment, the first TPMI indicates the precoding of the first signal; when the first TPMI belongs to the first TPMI set, the first coefficient is equal to 1; and when the first TPMI does not belong to the first TPMI set, the first coefficient is the number of non-zero-power antenna ports of the first signal divided by the number of ports of the first reference signal resource.

As one sub-embodiment of the above-mentioned embodiment, the second TPMI indicates precoding of the second signal; when the second TPMI belongs to the second TPMI set, the first coefficient is equal to 1; and when the second TPMI does not belong to the second TPMI set, the second coefficient is the number of non-zero-power antenna ports of the second signal divided by the number of ports of the second reference signal resource.

As one embodiment, the second TPMI indicates the precoding of the first signal; when the second TPMI belongs to the second TPMI set, the second coefficient is equal to 1; and when the second TPMI does not belong to the second TPMI set, the second coefficient is the number of non-zero-power antenna ports of the first signal divided by the number of ports of the second reference signal resource.

As one sub-embodiment of the above-mentioned embodiment, the first TPMI indicates the precoding of the first signal; when the first TPMI belongs to the first TPMI set, the second coefficient is equal to 1; and when the first TPMI does not belong to the first TPMI set, the first coefficient is the number of non-zero-power antenna ports of the first signal divided by the number of ports of the first reference signal resource.

As one embodiment, when the first TPMI belongs to the first TPMI set, the first coefficient is equal to 1; and when the first TPMI does not belong to the first TPMI set, the first coefficient is the number of non-all-zero rows of the first TPMI divided by the number of ports of the first reference signal resource.

As one embodiment, when the first TPMI belongs to the first TPMI set, the first coefficient is equal to 1; and when the first TPMI does not belong to the first TPMI set, the first coefficient is the number of non-zero-power antenna ports of the first TPMI divided by the number of ports of the first reference signal resource.

As one embodiment, when the first TPMI belongs to the first TPMI set, the first coefficient is equal to 1; and when the first TPMI does not belong to the first TPMI set, the first coefficient is the number of non-zero-power antenna ports of the first TPMI divided by the total number of ports of the first TPMI.

As one embodiment, when the first TPMI belongs to the first TPMI set, the first coefficient is equal to 1; and when the first TPMI does not belong to the first TPMI set, the first coefficient is the number of non-all-zero rows of the first TPMI divided by the total number of rows of the first TPMI.

### Embodiment 13

Embodiment 13 illustrates a schematic diagram of a first coefficient and a second coefficient according to another embodiment of the present application, as shown in FIG. 13.

In Embodiment 13, a first node in the present application receives a first information block set, wherein the first coefficient and the second coefficient depend on the first information block set.

As one embodiment, the first information block set is carried by RRC signaling.

As one embodiment, the first information block set is carried by MAC CE signaling.

As one embodiment, the first information block set comprises ul-FullPowerTransmission.

As one embodiment, the first information block set indicates fullpowerMode1.

As one embodiment, the first information block set indicates fullpowerMode2.

As one embodiment, the first information block set indicates fullpower.

As one embodiment, the first information block set is used for determining the first coefficient and the second coefficient.

As one embodiment, the first information block set comprises a first information block and a second information block, the first information block is used for determining the first coefficient, and the second information block is used for determining the second coefficient.

As one embodiment, the first information block set comprises a first information block and a second information block, the first coefficient depends on the first information block, and the second coefficient depends on the second information block.

As one embodiment, the name of the first information block comprises ul-FullPowerTransmission.

As one embodiment, the name of the second information block comprises ul-FullPowerTransmission.

As one embodiment, the first information block indicates fullpowerMode1.

As one embodiment, the first information block indicates fullpowerMode2.

As one embodiment, the first information block indicates fullpower.

As one embodiment, the second information block indicates fullpowerMode1.

As one embodiment, the second information block indicates fullpowerMode2.

As one embodiment, the second information block indicates fullpower.

As one embodiment, the specific definitions of ul-FullPowerTransmission, fullpowerMode1, fullpowerMode2 and fullpower refer to Section 7.1 of 3GPP TS38.213.

### Embodiment 14

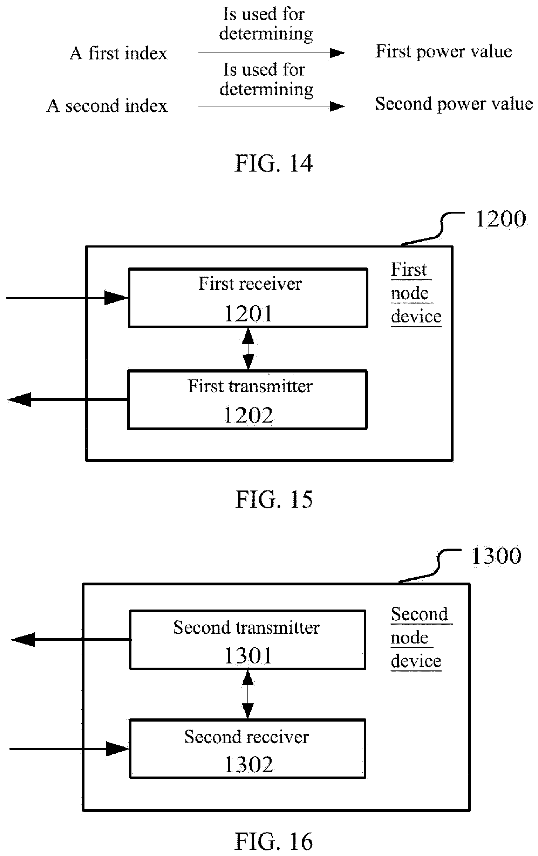

Embodiment 14 illustrates a schematic diagram of a first power value and a second power value according to one embodiment of the present application, as shown in FIG. 14.

In Embodiment 14, a first index is used for determining a first power value, and the second index is used for determining a second power value.

As one embodiment, the first index is used for indicating a first P0 value, and the second index is used for indicating a second P0 value.

As one embodiment, the first index is used for indicating a first path loss reference signal resource and a first Alpha value, and the second index is used for indicating a second path loss reference signal resource and a second Alpha value.

As one embodiment, the first index is used for indicating a first P0 value, and the second index is used for indicating a second P0 value.

As one embodiment, the first index is used for indicating a first path loss reference signal resource, a first P0 value and a first Alpha value, and the second index is used for indicating a second path loss reference signal resource, a second P0 value and a second Alpha value.

As one embodiment, the first index is used for indicating a first power control configuration, and the first power control configuration is used for determining the first power value; and the second index is used for indicating a second power control configuration, and the second power control configuration is used for determining the second power value.

As one embodiment, the first index explicitly indicates the first power control configuration.

As one embodiment, the first index implicitly indicates the first power control configuration.

As one embodiment, the first index is mapped to the first power control configuration.

As one embodiment, the first index corresponds to the first power control configuration.

As one embodiment, the first index is an index of the first power control configuration.

As one embodiment, the first index corresponds to an identifier of the first power control configuration.

As one embodiment, the first index is an index or identifier of the first power control configuration.

As one embodiment, the first power control configuration is SRI-PUSCH-PowerControl, and the index or identifier of the first power control configuration is sri-PUSCH-PowerControlId.

As one embodiment, the second index explicitly indicates the second power control configuration.

As one embodiment, the second index implicitly indicates the second power control configuration.

As one embodiment, the second index is mapped to the second power control configuration.

As one embodiment, the second index corresponds to the second power control configuration.

As one embodiment, the second index is an index of the second power control configuration.

As one embodiment, the second index corresponds to an identifier of the second power control configuration.

As one embodiment, the second index is an index or identifier of the second power control configuration.

As one embodiment, the second power control configuration is SRI-PUSCH-PowerControl, and the index or identifier of the second power control configuration is sri-PUSCH-PowerControlId.

As one embodiment, the first power control configuration is SRI-PUSCH-PowerControl, the index or identifier of the first power control configuration is sri-PUSCH-PowerControlId, and the first index is a value of an SRS resource indicator field in first signaling.

As one embodiment, the second power control configuration is SRI-PUSCH-PowerControl, the index or identifier of the second power control configuration is sri-PUSCH-PowerControlId, and the second index is a value of a second SRS resource indicator field in the first signaling.

As one embodiment, the first index is the value of the SRS resource indicator field in the first signaling, and the second index is the value of the second SRS resource indicator field in the first signaling; or the second index is the value of the SRS resource indicator field in the first signaling, and the first index is the value of the Second SRS resource indicator field in the first signaling.

Typically, the value of the SRS resource indicator field of the first signaling is one codepoint in the SRS resource indicator field.

Typically, the value of the second SRS resource indicator field of the first signaling is one codepoint of the second SRS resource indicator field.

As one embodiment, the first power value is equal to a minimum value among a first reference power value and a first reference power threshold value.

As one embodiment, the second power value is equal to a minimum value among a second reference power value and a second reference power threshold value.

As one embodiment, the unit of the first reference power value is dBm, the unit of the first reference power threshold value is dBm, the unit of the second reference power value is dBm, and the unit of the second reference power threshold value is dBm.

As one embodiment, the first reference power threshold value is predefined.

As one embodiment, the first reference power threshold value is configurable.

As one embodiment, the first reference power threshold value is maximum transmission power of a wireless signal using the same antenna port (s) as the first reference signal resource on a corresponding carrier, transmission occasion and serving cell.

As one embodiment, the second reference power threshold value is predefined.

As one embodiment, the second reference power threshold value is configurable.

As one embodiment, the second reference power threshold value is maximum transmission power of a wireless signal using the same antenna port (s) as the second reference signal resource on a corresponding carrier, transmission occasion and serving cell.

As one embodiment, the first power control configuration comprises an index of the first power control configuration, an index of the first path loss reference signal resource, the first P0 value, the first Alpha value, and a first closed loop index; and the second power control configuration comprises an index of the second power control configuration, an index of the second path loss reference signal resource, the second P0 value, the second Alpha value, and a second closed loop index.

As one embodiment, the first power control configuration comprises an index of the first path loss reference signal resource, the first P0 value, and the first Alpha value; and the second power control configuration comprises an index of the second path loss reference signal resource, the second P0 value, and the second Alpha value.

As one embodiment, the unit of the first P0 value is dBm, and the unit of the second P0 value is dBm.

As one embodiment, the first reference power value and the first P0 value are linearly correlated, and a coefficient of a linear correlation between the first reference power value and the first P0 value is 1; and the second reference power value and the second P0 value are linearly correlated, and a coefficient of a linear correlation between the second reference power value and the second P0 value is 1.

As one embodiment, a first path loss is a path loss obtained by a measurement for the first path loss reference signal resource, and the first reference power value and the first path loss are linearly correlated; and a second path loss is a path loss obtained by a measurement for the second path loss reference signal resource, and the second reference power value and the second path loss are linearly correlated.

As one embodiment, a first path loss is a path loss obtained by a measurement for the first path loss reference signal resource, the first reference power value and the first path loss are linearly correlated, and a coefficient of a linear correlation between the first reference power value and the first path loss is the first Alpha value; and a second path loss is a path loss obtained by a measurement for the second path loss reference signal resource, the second reference power value and the second path loss are linearly correlated, and a coefficient of a linear correlation between the second reference power value and the second path loss is the second Alpha value.

As one embodiment, the unit of the first path loss is dB, and the unit of the second path loss is dB.

As one embodiment, the first path loss is equal to transmission power of the first path loss reference signal resource minus RSRP (Reference Signal Received Power) of the first path loss reference signal resource, and the second path loss is equal to transmission power of the second path loss reference signal resource minus RSRP of the second path loss reference signal resource.

As one embodiment, the first reference power value is *P*_{PUSCH,*b,f,c*}(i,*j*,*q_{d},*l)*,* the first reference power threshold value is *P*_{CMAX,*f,c*}(*i*)*,* the first P0 value is *P*_{O_PUSCH,*b*,*f*,*c*}(*j*), the first path loss is *PL_{b,f,c}*(*q_{d}*)*,* and a linear coefficient between the first reference power value and the first path loss is *α_{b,f,c}*(*j*)*.*

As one embodiment, the second reference power value is *P*_{PUSCH,*b,f,c*}(i,*j*,*q_{d},*l)*,* the second reference power threshold is *P*_{CMAX,*f,c*}(*i*)*,* the second P0 value is *P*_{O_PUSCH,*b,f,c*}(*j*), the second path loss is *PL_{b,f,c}*(*q_{d}*)*,* and a linear coefficient between the second reference power value and the second path loss is *α_{b,f,c}*(*j*)*.*

As one embodiment, the specific definitions of the *P*_{PUSCH,*b,f,c*}(i,*j*,*q_{d},*l)*,* the *P*_{CMAX,*f,c*}(*i*)*,* the *P*_{O_PUSCH,*b,f,c*}(*j*), the *PL_{b,f,c}*(*q_{d}*) and the *α_{b,f,c}*(*j*) refer to Section 7.1 of TS38.213.

As one embodiment, the first power value and the first P0 value are linearly correlated, and a coefficient of a linear correlation between the first power value and the first P0 value is 1; and the second power value and the second P0 value are linearly correlated, and a coefficient of a linear correlation between the second power value and the second P0 value is 1.

As one embodiment, a first path loss is a path loss obtained by a measurement for the first path loss reference signal resource, and the first power value and the first path loss are linearly correlated; and a second path loss is a path loss obtained by a measurement for the second path loss reference signal resource, and the second power value and the second path loss are linearly correlated.

As one embodiment, a first path loss is a path loss obtained by a measurement for the first path loss reference signal resource, the first power value and the first path loss are linearly correlated, and a coefficient of a linear correlation between the first power value and the first path loss is the first Alpha value; and a second path loss is a path loss obtained by a measurement for the second path loss reference signal resource, the second power value and the second path loss are linearly correlated, and a coefficient of a linear correlation between the second power value and the second path loss is the second Alpha value.

As one embodiment, the unit of the first path loss is dB, and the unit of the second path loss is dB.

As one embodiment, the first path loss is equal to transmission power of the first path loss reference signal resource minus RSRP (Reference Signal Received Power) of the first path loss reference signal resource, and the second path loss is equal to transmission power of the second path loss reference signal resource minus RSRP of the second path loss reference signal resource.

As one embodiment, the first power value is *P*_{PUSCH,*b,f,c*}(i,*j*,*g_{d},*l)*,* the first reference power threshold value is *P*_{CMAX,*f,c*}(*i*)*,* the first P0 value is *P*_{O_PUSCH,*b,f,c*}(*j*), the first path loss is *PL_{b,f,c}*(*q_{d}*)*,* and a linear coefficient between the first reference power value and the first path loss is *α_{b,f,c}*(*j*)*.*

As one embodiment, the second power value is *P*_{PUSCH,*b,f,c*}(i*,j,q_{d},*l)*,* the second power threshold is *P*_{CMAX,*f,c*}(*i*)*,* the second P0 value is *P*_{O_PUSCH,b,f,c}(*j*), the second path loss is *PL_{b,f,c}*(*q_{d}*)*,* and a linear coefficient between the second power value and the second path loss is *α_{b,f,c}*(*j*)*.*

### Embodiment 15

Embodiment 15 illustrates a structural block diagram of a processing device for use in a first node device according to one embodiment of the present application, as shown in FIG. 15. In FIG. 15, the processing device 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {the antenna 452, the receiving device 454, the receiving processor 456, the multi-antenna receiving processor 458, the controller/processor 459, the memory 460, and data source 467} in Embodiment 4.

As one embodiment, the first transmitter 1202 comprises at least one of {the antenna 452, the transmitting device 454, the transmitting processor 468, the multi-antenna transmitting processor 457, the controller/processor 459, the memory 460, and the data source 467} in Embodiment 4.

The first receiver 1201 receives first signaling;
a first transmitter 1202 for sending a first signal in a first time-frequency resource set,
in Embodiment 15, the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, it is characterized by comprising:
the first transmitter 1202 for sending a second signal in the first time-frequency resource set, or abandons sending the second signal in the first time-frequency resource set,
wherein the first power value and the second power value are used for determining whether the second signal is sent in the first time-frequency resource set.

As one embodiment, it is characterized in that whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

As one embodiment, it is characterized in that the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

As one embodiment, it is characterized in that a linear value of a third power value is the product of a linear value of the first power value and a first coefficient, a linear value of a fourth power value is the product of a linear value of the second power value and a second coefficient, and whether the sum of the third power value and the fourth power value is greater than the first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

As one embodiment, it is characterized in that the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

As one embodiment, it is characterized in that the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

As one embodiment, it is characterized by comprising:
the first transmitter 1202 for sending a first reference information block and a second reference information block,
wherein the first reference information block is used for indicating a first TPMI set, and the second reference information block is used for indicating a second TPMI set; the first signaling is used for indicating a first TPMI and a second TPMI; and whether the first TPMI belongs to the first TPMI set is used for determining the first coefficient, and whether the second TPMI belongs to the second TPMI set is used for determining the second coefficient.

As one embodiment, it is characterized by comprising:
the first receiver 1201 for receiving a first information block set,
wherein the first coefficient and the second coefficient depend on the first information block set.

### Embodiment 16

Embodiment 16 illustrates a structural block diagram of a processing device for use in a second node device according to one embodiment of the present application, as shown in FIG. 16. In FIG. 16, the processing device 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {the antenna 420, the transmitting device 418, the transmitting processor 416, the multi-antenna transmitting processor 471, the controller/processor 475, and the memory 476} in Embodiment 4.

As one embodiment, the second receiver 1302 comprises at least one of {the antenna 420, the receiving device 418, the receiving processor 470, the multi-antenna receiving processor 472, the controller/processor 475, and the memory 476} in Embodiment 4.

The second transmitter 1301 sends the first signaling;
a second receiver 1302 for receiving a first signal in a first time-frequency resource set,
in Embodiment 16, the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

As one embodiment, it is characterized by comprising:
the second receiver 1302 for monitoring a second signal in the first time-frequency resource set,
wherein the first power value and the second power value are used for determining whether the second signal is sent in the first time-frequency resource set.

As one embodiment, it is characterized in that whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

As one embodiment, it is characterized in that the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

As one embodiment, it is characterized in that a linear value of a third power value is the product of a linear value of the first power value and a first coefficient, a linear value of a fourth power value is the product of a linear value of the second power value and a second coefficient, and whether the sum of the third power value and the fourth power value is greater than the first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

As one embodiment, it is characterized in that the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

As one embodiment, it is characterized in that the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

As one embodiment, it is characterized by comprising:
the second receiver 1302 for receiving the first reference information block and the second reference information block,
wherein the first reference information block is used for indicating a first TPMI set, and the second reference information block is used for indicating a second TPMI set; the first signaling is used for indicating a first TPMI and a second TPMI; and whether the first TPMI belongs to the first TPMI set is used for determining the first coefficient, and whether the second TPMI belongs to the second TPMI set is used for determining the second coefficient.

As one embodiment, it is characterized by comprising:
the second transmitter 1301 for sending the first information block set,
wherein the first coefficient and the second coefficient depend on the first information block set.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The user equipment, the terminal and the UE in the present application include but are not limited to a drone, a communication module on the drone, a remote-controlled airplane, an aircraft, a small airplane, a mobile phone, a tablet computer, a notebook, a vehicle-mounted communication device, a wireless sensor, an Internet card, an Internet of Things terminal, an RFID terminal, an NB-IOT terminal, an MTC (Machine Type Communication) terminal, an eMTC (enhanced MTC) terminal, a data card, an Internet card, a vehicle-mounted communication device, a low-cost mobile phone, a low-cost tablet computer and other wireless communication devices. The base stations or the system devices in the present application include but are not limited to a macrocell base station, a microcell base station, a Femtocell, a relay base station, a gNB (NR node B) NR node B, a TRP (Transmitter Receiver Point) and other wireless communication devices.

The above is only a preferred embodiment of the present application and is not intended to limit the scope of protection of the present application. Any changes and modifications made based on the embodiments described in the specification, if similar partial or full technical effects can be obtained, should be deemed to be obvious and fall within the scope of protection of the present invention.

## Claims

1. A first node device used for communication, comprising:
a first receiver for receiving first signaling; and
a first transmitter for sending a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

2. The first node device according to claim 1, comprising:
the first transmitter for sending a second signal in the first time-frequency resource set, or abandoning sending the second signal in the first time-frequency resource set,
wherein the first power value and the second power value are used for determining whether the second signal is sent in the first time-frequency resource set.

3. The first node device according to claim 2, wherein whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

4. The first node device according to claim 3, wherein the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

5. The first node device according to claim 2, wherein a linear value of a third power value is the product of a linear value of the first power value and the first coefficient, a linear value of a fourth power value is the product of a linear value of the second power value and the second coefficient, and whether the sum of the third power value and the fourth power value is greater than a first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

6. The first node device according to claim 5, wherein the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

7. The first node device according to any one of claims 1 to 6, wherein the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

8. A second node device used for communication, comprising:
a second transmitter for sending first signaling; and
a second receiver for receiving a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

9. The second node device according to claim 8, comprising:
the second receiver for monitoring a second signal in the first time-frequency resource set,
wherein the first power value and the second power value are used for determining whether the second signal is sent in the first time-frequency resource set.

10. The second node device according to claim 9, wherein whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

11. The second node device according to claim 10, wherein the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

12. The second node device according to claim 9, wherein a linear value of a third power value is the product of a linear value of the first power value and the first coefficient, a linear value of a fourth power value is the product of a linear value of the second power value and the second coefficient, and whether the sum of the third power value and the fourth power value is greater than a first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

13. The second node device according to claim 12, wherein the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

14. The second node device according to any one of claims 8 to 13, wherein the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

15. A method for a first node used for communication, comprising:
receiving first signaling; and
sending a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

16. The method according to claim 15, comprising:
sending a second signal in the first time-frequency resource set, or abandoning sending the second signal in the first time-frequency resource set,
wherein the first power value and the second power value are used for determining whether the second signal is sent in the first time-frequency resource set.

17. The method according to claim 16, wherein whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

18. The method according to claim 17, wherein the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

19. The method according to claim 16, wherein a linear value of a third power value is the product of a linear value of the first power value and the first coefficient, a linear value of a fourth power value is the product of a linear value of the second power value and the second coefficient, and whether the sum of the third power value and the fourth power value is greater than a first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

20. The method according to claim 19, wherein the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

21. The method according to any one of claims 15 to 20, wherein the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.

22. A method for a second node used for communication, comprising:
sending first signaling; and
receiving a first signal in a first time-frequency resource set,
wherein the first signaling is used for indicating the first time-frequency resource set; the first signaling is used for indicating a first index and a second index, the first index is used for indicating a first reference signal resource, and the second index is used for indicating a second reference signal resource; the first index is used for determining a first power value, and the second index is used for determining a second power value; a first target reference signal resource is used for determining an antenna port of the first signal, and the first target reference signal resource is the first reference signal resource or the second reference signal resource; the product of a linear value of a first target power value and a first target coefficient is used for determining a linear value of transmission power of the first signal; the first target reference signal resource is a first reference signal resource, the first target power value is the first power value, and the first target coefficient is a first coefficient, or the first target reference signal resource is a second reference signal resource, the first target power value is the second power value, and the first target coefficient is a second coefficient.

23. The method according to claim 22, comprising:
monitoring a second signal in the first time-frequency resource set,
wherein the first power value and the second power value are used for determining whether the second signal is sent in the first time-frequency resource set.

24. The method according to claim 23, wherein whether the sum of the first power value and the second power value is greater than a first power threshold value is used for determining whether the second signal is sent in the first time-frequency resource set; when the sum of the first power value and the second power value is greater than the first power threshold value, the second signal is abandoned from being sent in the first time-frequency resource set; and when the sum of the first power value and the second power value is less than or equal to the first power threshold value, the second signal is sent in the first time-frequency resource set.

25. The method according to claim 24, wherein the first power value is less than or equal to the first power threshold value, and the second power value is less than or equal to the first power threshold value; a linear value of the transmission power of the first signal is equal to the product of a linear value of the first target power value and the first target coefficient; and when the sum of the first power value and the second power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

26. The method according to claim 23, wherein a linear value of a third power value is the product of a linear value of the first power value and the first coefficient, a linear value of a fourth power value is the product of a linear value of the second power value and the second coefficient, and whether the sum of the third power value and the fourth power value is greater than a first power threshold value is used for determining whether the second signal is sent in the first time-frequency resource set; when the sum of the third power value and the fourth power value is greater than the first power threshold value, the second signal is abandoned from being sent in the first time-frequency resource set; and when the sum of the third power value and the fourth power value is less than or equal to the first power threshold value, the second signal is sent in the first time-frequency resource set.

27. The method according to claim 26, wherein the third power value is less than or equal to the first power threshold value, and the fourth power value is less than or equal to the first power threshold value; a linear value of the transmission power of the first signal is equal to the product of a linear value of the first target power value and the first target coefficient, or a linear value of the transmission power of the first signal is equal to a minimum value among the product of the linear value of the first target power value and the first target coefficient, and a linear value of the first power threshold value; and when the sum of the third power value and the fourth power value is less than or equal to the first power threshold value, a linear value of transmission power of the second signal is equal to the product of a linear value of a second target power value and a second target coefficient, the second target power value is a power value other than the first target power value among the first power value and the second power value, and the second target coefficient is a coefficient other than the first target coefficient among the first coefficient and the second coefficient.

28. The method according to any one of claims 22 to 27, wherein the first signaling indicates scheduling information of a first transport block and scheduling information of a second transport block, the scheduling information of the first transport block at least comprises the first index, the scheduling information of the second transport block at least comprises the second index, the first transport block is mapped to a first codeword, the second transport block is mapped to a second codeword, and a size relationship between an index of the first codeword and an index of the second codeword is used for determining the first target reference signal resource from the first reference signal resource and the second reference signal resource.
